# EUROPEAN PATENT SPECIFICATION

(11) **EP 1 491 859 B1**
(45) Date of publication and mention of the grant of the patent: **18.01.2017**
(21) Application number: 03014760.7
(22) Date of filing: 27.06.2003
(51) Int. Cl.: G01C 21/34, G01C 21/36, G08G 1/0968

(54) **Navigation method and navigation system**
Navigationsverfahren und Navigationssystem
Méthode et système de navigation

(43) Date of publication of application: 29.12.2004
(73) Proprietor: Harman Becker Automotive Systems GmbH, 76307 Karlsbad (DE)
(72) Inventor: Stege, Kurt, 22307 Hamburg (DE)
(74) Representative: Grünecker Patent- und Rechtsanwälte PartG mbB

(56) References cited:
- EP-A- 0 967 460
- WO-A-02/065428
- US-A- 5 550 538
- US-A- 6 163 751

## Description

The invention relates to a method and a navigation system to assist navigation, in particular, in regions the user of the navigation system is relatively well familiar with.

Since the outcome of satellite navigation data, navigation systems, especially for cars, are getting more and more used. Usually those navigation systems receive position data from a device based on the global positioning system (GPS) technology.

The navigation systems are most commonly used in cases for which the user of the navigation system is not familiar with the area he is travelling in or travelling to. The user then communicates the destination he wants to reach to the system and eventually also enters further waypoints to which he wants to travel on his way to his final destination. A waypoint is a navigation point, characterized by its coordinates which is determined either by the user or the system. Based on a digitized map, which comprises road information for the area the user is interested in, the navigation system calculates a route, being a succession of waypoints, and assists the user in finding the right way to the waypoints and the final destination. For instance, in the case of a car navigation system, the navigation system tells the driver which road he should drive on and where he has to change onto another road. For this the navigation system employs means to provide the information in a graphical way, but also assists with acoustic information.

Today's navigation systems typically provide three operation modes. Firstly, the acoustical and optical guidance, secondly, optical guidance only and thirdly, no guidance. None of the three operation modes is however suited to be used in areas the user of the navigation system is familiar with. As the user usually knows where to go and how to reach the destination, mode 1 is not suitable as the user receives too much navigation information and he is especially not interested in acoustic announcements. This disadvantage is not present in the second mode. In this case, however, navigation information could still be interesting for the user as, for example, a traffic jam or road constructions may be present on the route that the user usually takes. Then, only providing optical guidance is not sufficient, as the chance is very high that the user will not read the warnings that are provided by the navigation system and, therefore, he will end up in the traffic jam. It is evident that also the third mode is not suited, as no information is provided at all.

Documents US 6,163,751 and WO 02/065428 A2 disclose navigation systems according to the prior art.

Also, EP 0 967 460 A1 discloses a method to assist navigation by means of a navigation system comprising the steps of providing a digitized map, determining whether the current time is within a scheduled commute time window, and if this is the case, determining a static route to a commute destination, determining if necessary a dynamic route avoiding detected traffic congestion along the static route and proposing it to the user.

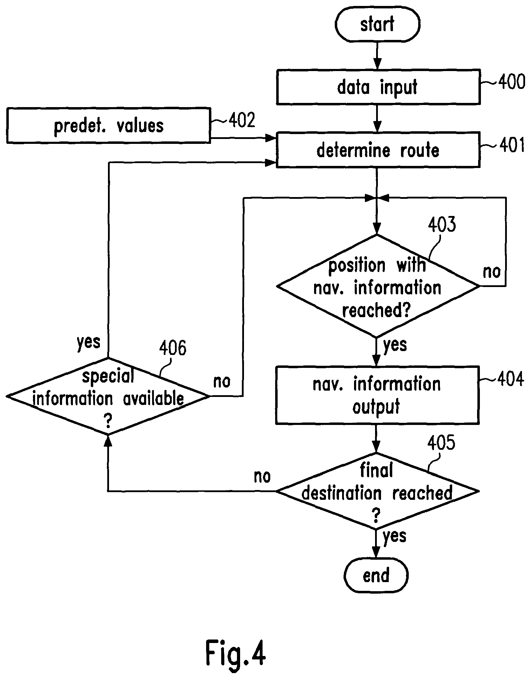

Fig. 4 shows a typical navigation method as used in navigation systems according to the prior art. After starting up the navigation system, step 400 consists in inputting data into the navigation system. This data comprises a digitized map that is uploaded into a memory of the navigation system and at least the final destination waypoint. A second waypoint, usually the starting waypoint, is needed to be able to calculate a route and can either be manually provided by the user or be provided automatically by a positioning system. Step 401 then consists in calculating a route based on the input data. To calculate this route, the system may use further predetermined values which in step 402 have either been input manually by the user or consist of default settings. These predetermined values may contain certain parameters on how to calculate a route, for example, if the user wishes to find the shortest possible way from the starting point to the final destination waypoint or the fastest route, or on how to output the navigation information, generated in step 401. The system may also use further information concerning, for example, traffic jams to calculate a route. Usually this kind of information is received via radio and input into the navigation system.

In step 403, the method consists in checking whether a position has been reached on the route for which navigation information has been produced by the navigation system. If this is not the case, step 403 is repeated until such a position is reached. If a position for which navigation information has been produced is reached, the corresponding navigation information is output in step 404. The navigation information is then shown on a screen and/or acoustically announced. Step 405 consists in checking whether the final destination waypoint has been reached. If this is the case, the navigation method ends. If this is not the case, the method proceeds with step 406, wherein the navigation system checks whether new updated information, about traffic jams for example, is available to the system. If this is the case, the method proceeds with step 401 in which a new route is calculated based on the newly available information. If this is not the case, the process continues with step 403.

In such a prior art system, when a new route is calculated, due to updated road information, the old route is overwritten and a comparison of the new and old route is not possible, neither for the user nor for the navigation system. This is in particular disadvantageous for cases in which the amount of navigation information given for the old and the new route shall differ.

It is therefore the object of this invention to provide a method to assist navigation and to provide a navigation system which overcomes the above stated problems and further enhances the comfort of navigation assistance.

This object is achieved by the method according to claim 1.

The user can provide a navigation system, using the inventive navigation method, with at least two waypoints, for example, a starting waypoint and a final destination waypoint. Alternatively a positioning system can provide the starting point, being the current position, and - based on this information together with road information from the provided digital map - the navigation system can compute the so-called static route which is one possible way to go from the one waypoint to the other and which is described as a succession of waypoints. Depending on predetermined parameters, either predetermined by the system or by the user, different static routes can be obtained, like for example the fastest route or the shortest route. As an alternative, the static route could also be uploaded into the navigation system from a storage medium. The static route represents, for example, a route which the user regularly travels on, like the daily way from home to work and back. However the calculation does not take into account any information which may be variable in time.

In contrast thereto a second route, the dynamic route, is determined which, in addition to the waypoints and the road information, also takes into account dynamic information comprising, amongst others, traffic jam information, construction work information, closed road information and/or weather information. Dynamic information is defined as being any further information that might lead to a change in the static route, and which may be also changing in time. Depending on the current situation, the determined dynamic route may therefore be different from the static route. In this way, both a static and a dynamic route are determined and present. Depending on the way the navigation system is configured, it is then possible to output the obtained navigation data either about the static route or the dynamic route. Thus, the navigation method according to invention may provide the necessary navigation information also in a situation in which the user is familiar with the roads he is travelling on, as either the more complete navigation information of the dynamic route or the reduced information set of the static route can be communicated to the user.

At the moment the dynamic route is determined, the user is informed that on his usual route, which corresponds to the static route, a problem may currently be present which might lead to a longer travelling time and therefore the alternative, the dynamic route, can be proposed. Then the user knows right from the start that it might be advantageous to follow the proposed dynamic route.

The inventive method provides the possibility that the amount of information and the way the information is given may be different depending on whether the static route or the dynamic route is followed, thereby further improving the comfort of the navigation system.

Navigation information for the static route can be not output or only output optically and navigation information for the dynamic route can be output acoustically.

This means, when the user is moving on the static route, e.g. a road he is familiar with, he is not overloaded with acoustical navigation information which he does not need anyway. If static navigation is not at all output, a screen, the navigation system is using, may be used for different applications like information about the radio stations or the like. However, in the case that due to a dynamic event, the navigation system proposes to now follow the dynamic route, it becomes important that the information is provided acoustically so that it is ensured that the user receives the necessary navigation information at the time he needs an update about the situation. Optionally navigation information concerning the dynamic route could also be output in an optical way on a screen.

It is particularly interesting for the user to know exactly where he is situated. The current position can, for example, be shown on the screen of the navigation system.

According to a preferred embodiment, the dynamic route can be re-determined on a regular basis and/or when new dynamic information is provided to the navigation system and/or if the current position is neither on the previously determined dynamic route nor on the static route. By providing this update concerning the dynamic route, it can be ensured that changing situations are taken into account. This is particularly important when a previously announced traffic jam has disappeared so that the user should not follow the previously determined dynamic route but can continue to follow the static route. The static route, however, might be the same as the newly determined dynamic route. Of particular importance is also the situation in which the user erroneously or purposely quits both the static route and the dynamic route. In this case, the previously determined dynamic route is no longer valid and, to be able to assist the user, it becomes necessary to re-determine a new dynamic route based on the new circumstances.

In a further variant of the method, the dynamic route can, when the current position is neither on the previously determined dynamic route nor on the static route, be re-determined such that the re-determined dynamic route and the static route have more than one waypoint in common. The user might not be interested in a newly determined dynamic route which only takes into account the final destination waypoint, but it could be that the user wants to return back to the static route as quickly as possible or in the shortest way. However, also in this case, the dynamic route determination still takes into account dynamic information.

In a further preferred embodiment, the method can further comprise the step of outputting static route navigation information if the navigation system is on the static route and providing dynamic route navigation information if the navigation system is on the dynamic route but not on the static route. If the user knows the area he is driving in and follows a route corresponding to the static route, he might not be interested in receiving too much navigation information. However, as soon as he decides to leave the static route to follow a dynamic route he might need to receive more information than usual. This ensures an enhanced comfort of the navigation method.

The inventive method comprises the step of comparing a following manoeuvre step of the static route and the following manoeuvre step of the dynamic route, if the current position data corresponds to a waypoint on both the static and the dynamic route, and outputting dynamic route navigation information about the following manoeuvre step, if the manoeuvre steps are different. The manoeuvre step actually contains the description on how to reach a next waypoint of a route. This additional method step brings the advantage that even while the user is travelling on the static route he nevertheless receives additional information should the following step on the static and dynamic routes be different. Thus, at the right moment, the user can make a decision whether to follow the usual static route or to follow the guidance advice of the navigation system, resulting in a further enhanced comfort of the navigation system.

According to another preferred embodiment, at least one of the steps of determining the static and/or the dynamic route can be performed on request. This step is of particular interest in the case that the user has decided to follow the advice of the navigation system to quit the static route and follow the dynamic route. In the case of the user being familiar with the proposed dynamic route, it is advantageous that he has the choice to decide that the dynamic route should be treated as a static route and thus the user will not receive too much navigation information. In addition this step is also of particular interest in the case that the user is positioned outside the static route and that the user wants the navigation system to determine a new static route, thus not taking into account dynamic information. The request from the user can be transmitted to the navigation system using, for example, a special button or a soft-key on the man machine interface or a speech recognition functionality. By providing these additional possibilities, the use of the navigation system is further rendered more comfortable.

Preferably, the navigation systems can provide an output, in particular an acoustic output, when the navigation system detects that a predetermined criterion is fulfilled. Especially in the case that the navigation system detects that the current position is not on the static route, as one example of a predetermined criterion, the navigation system could propose to the user to determine new route data leading perhaps to different static and/or dynamic routes, which the user could follow. It is then up to the user whether he wants to follow the advice or not and request that a new route, static and/or dynamic, is determined.

A further variant of the invention can comprise the further step of storing the static route on a non-volatile memory. Thus, the user can decide whether the route he is currently travelling on is one in which he will be interested in in the future. Therefore, it is advantageous to be able to store this route on a volatile memory on which, for example, other static routes could already be stored. Storing media may include CD ROMS, floppy disks, hard disks or any other kind of non-volatile memory.

According to claim 7, the invention further provides a computer program product directly loadable into the internal memory of a digital computer comprising software code portions for performing the steps of one of the methods described above.

According to claim 8, the invention also provides a computer program product stored on a medium readable by a computer system comprising computer-readable programme means for causing a computer to perform the steps of one of the previously described methods.

In addition, the invention provides a navigation system according to claim 9 for performing one of the previously described methods.

The user can provide the navigation system with at least two waypoints, like a starting waypoint and a final destination waypoint. Alternatively, a positioning system can provide a starting point, being the current position, and - based on this information together with road information from the provided digitized map - the navigation system can compute the so-called static route which is one possible way to go from the one waypoint to the other and which is described as a succession of waypoints. Depending on predetermined parameters, either predetermined by the system or by the user, different static routes can be obtained, like for example the fastest route or the shortest route. As an alternative, the static route could also be uploaded into the navigation system from a storage medium. The static route represents, for example, a route which the user regularly travels on, like the daily way from home to work and back. In any case, the determination of the static route does not take into account any information which may be variable in time.

In contrast thereto, the navigation system determines a second route, the dynamic route, which in addition to the static information such as waypoints and the road information, also takes into account dynamic information comprising, amongst others, traffic jam information, construction work information, closed road information and/or weather information. Dynamic information is defined as being any further information that might lead to a change in the static route, and which may be also changing in time. Depending on the current situation the determined dynamic route may therefore be different from the static route. In this way, both a static and a dynamic route are determined and present. Depending on the way the navigation system is configured, it is then possible to output the obtained navigation data either about the static route or the dynamic route. Thus, the navigation system according to the invention may provide the necessary navigation information also in a situation in which the user is familiar with the roads he is travelling on, as either the more complete navigation information of the dynamic route or the reduced information set of the static route can be communicated to the user.

In another preferred embodiment, the outputting means of the navigation system can be designed such that if the navigation system is on the static route, the static route navigation information is output and if the navigation system is on the dynamic route but not on the static route, then the dynamic route navigation information is output. Thus using the current position data the navigation system knows, depending on this position, what kind of outputting format should be used. For example on the static route, the user receives only navigation information via the optical means, such as a screen, whereas if the user is outside the static route it makes sense to also provide the user with acoustically output information. In other words, the use of the navigation system becomes more comfortable.

According to claim 11, the invention further provides a vehicle, in particular a car, comprising one of the previously described navigation systems.

In the following, examples of the inventive method to assist navigation are described with respect to the Figures.
Fig. 1 shows a flow chart of one embodiment of the inventive navigation method applied to navigation in areas being familiar to the user of a navigation system, using the inventive navigation method,
Fig. 2 shows a flow chart of a further aspect of the inventive navigation method, illustrating the role of current position data,
Figs. 3a - 3d show application examples of the inventive method, and
Fig. 4 shows a flow chart for a navigation method according to the prior art.

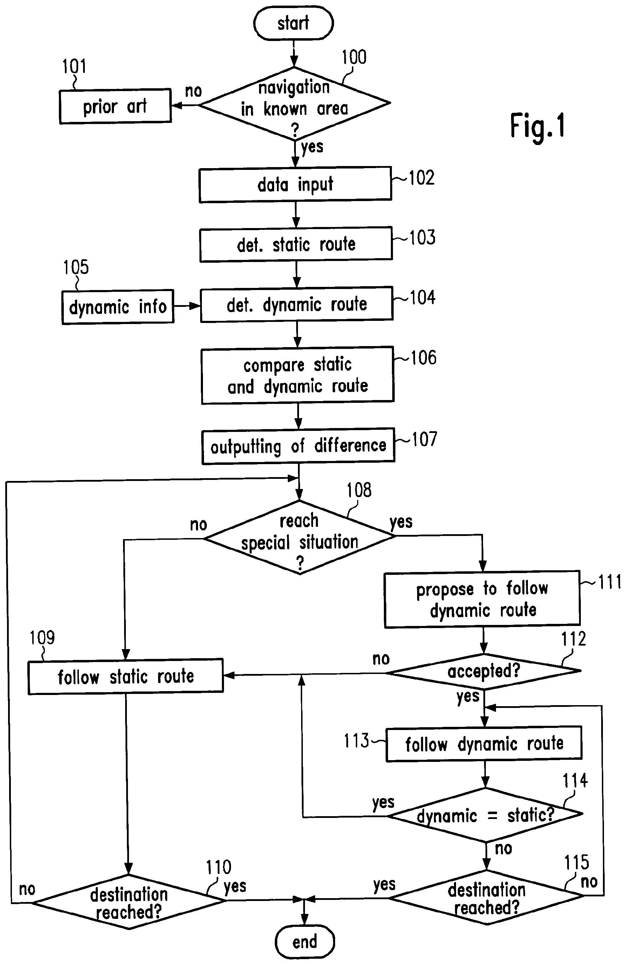

Fig. 1 shows one embodiment of the inventive navigation method. After starting up the navigation system, step 100 consists of determining whether the navigation is performed in an area which is known to the user. If the area he is travelling in is unknown to the user, the method proceeds with step 101 which is the method according to the prior art, as has been described above in relation to Fig. 4. If, however, the user navigates in a known area, for example in his home town, the method proceeds with step 102.

Step 102 consists of providing data to the navigation system. This data includes the digitized map containing road information, the final destination waypoint the user wants to drive to, and at least one further waypoint, for example, the position in which the user is currently situated. Based on this data, in step 103 the navigation system determines a route which is called the static route and navigation information which will be output at corresponding waypoints on the route. As an alternative, a known route could also be directly uploaded into the memory of the navigation system. Such a known route may have formerly been stored on a non-volatile memory, like the internal non-volatile memory of the navigation system, a CD ROM, a floppy disk or similar storage devices. At the same time it is of course also possible to save a determined static route onto non-volatile memory.

In step 104, the navigation system determines a second route, the dynamic route. To determine the dynamic route and the corresponding navigation information, the navigation system not only uses the data already input in step 102 comprising the final destination waypoint and at least one further waypoint and static road information from the digitized map, but further also bases the calculation on dynamic information which becomes available to the navigation system in step 105. Dynamic information is defined as being any further information that might lead to a change in the static route, and which may also change in time. Examples for dynamic information are information about traffic jams, closed roads, road construction work and special weather conditions such as snow or ice, which the system, for example, receives via TMC messages. Thus, in contrast to the static route which is fixed as the data the static route is based on is not varying in time, the dynamic route which is determined based on static information plus the dynamic information is not fixed and might well vary in time.

Step 106 consists of comparing the static and the dynamic route. For the case that the navigation system identifies that those two routes are different, the differences are output to the user in step 107. To draw the attention of the user of the navigation system to this difference, the navigation information outputs the difference preferably using optical means, e.g. a screen, and acoustical means.

In step 108 the navigation system checks whether the current position, whereby the current position data is available to the navigation system via a positioning system such as a device based on the global positioning system (GPS), corresponds to a position for which the next manoeuvre step is different for the static route and the dynamic route. If this is not the case the method proceeds with process step 109. In this case the user follows the static route and as he is familiar with this static route, e.g. his route to work or back home, the navigation information, created in step 103, is preferably not output or output in an optical way only, on the screen of the navigation system. No acoustic outputting shall take place as this would only annoy the user who is anyway already aware of the route. However, it is of course at any time possible, that the user decides, by adapting the configuration parameters of the navigation system that nevertheless he also wants to receive the information in an acoustic way. In step 110 it is then checked whether the final destination has been reached. If this is the case the navigation method stops. If this is not the case the method continues with step 108.

If in step 108, the navigation system detects that the next manoeuvre step is different for the dynamic and the static route the process continues with step 111. In this step the navigation system proposes to follow the dynamic route. The corresponding navigation information is then preferably output optically and acoustically, to draw the attention of the user to the fact that dynamic and static route will be different for the next manoeuvre step. In step 112, the navigation system detects, based on position data from the positioning device, whether the user has decided to follow the dynamic route or the static route. If the user decided to follow the static route, the process continues with step 109 already described above. If, to the contrary, the user has decided to follow the dynamic route in order to, for example, avoid a traffic jam, the process continues with step 113. Now the user follows the dynamic route which means that he is not travelling on the static route anymore and therefore it makes sense to not only output navigation information concerning the dynamic route, which has been produced in step 104, in an optical way only, on the screen of the navigation system, but also to use acoustic means. For the case that the user does not wish to receive information in an acoustic way, the method provides the possibility to declare at any moment that the dynamic route should be considered as the static route (the corresponding process steps are not shown).

In process step 114, the navigation system checks whether the current position with the current position data provided by the positioning device is on the dynamic route only or also on the static route. In the case that the current position is both on the dynamic route and the static route, which means that the navigation system has guided the user back on the static route, the process continues with step 109.

For the case that the user is still situated on the dynamic route only, the process continues with step 115. Therein, it is checked whether the current position corresponds to the final destination waypoint. If this is the case, the navigation method ends. If this is not the case, the method continues with step 113.

Any time the navigation system receives new dynamic data, a new dynamic route and new navigation information is re-determined, and the corresponding differences and following manoeuvre steps are announced (the detailed process steps are not shown).

The shown flow of process steps is not the only possibility to implement the invention. Other variants can be created by exchanging the order of the process steps such as, for example, process steps 103 and 104. It is also, of course, possible to apply the described navigation method for areas that are not known to the user. For this case, it is useful that the user has the possibility to declare at any time that the static route should be considered as being the dynamic route in order to also receive navigation information in an acoustic way, even if no special situations leading to dynamic information are currently present.

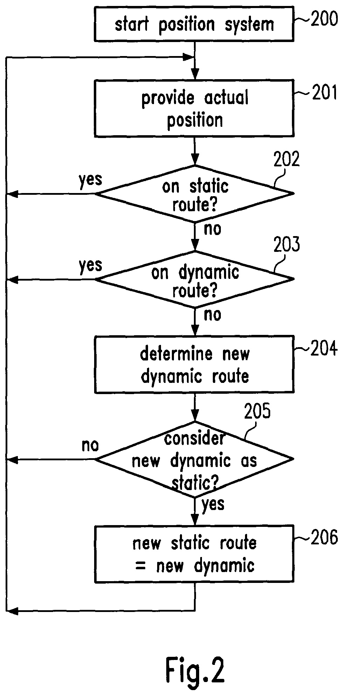

The flow chart shown in Fig. 2 represents process steps which run in parallel to the steps as shown in Fig. 1. Step 200 consists of starting up the positioning device which determines current position data of the navigation system. This device could, for example, be based on the global positioning system technology (GPS). In step 201 the positioning system provides current position data to the navigation system. In step 202 the navigation system then checks whether this current position corresponds to a waypoint on the static route. If this is the case, the process continues with step 201. If this is not the case, the method proceeds to step 203 where the navigation system checks whether the current position corresponds to a waypoint on the dynamic route. If this is the case, the process continues with process step 201.

If this is not the case, the method proceeds with process step 204 which consists of determining a new dynamic route. Therein process step 204 corresponds to process step 104 in Fig. 1. This means that the process shown in Fig. 1 can be continued with the newly determined dynamic route. The process as shown in Fig. 2 continues with process step 205 in which the navigation system checks whether it should consider the new dynamic route as a new static route. If this is not the case, the process continues with step 201. If however the user has declared that he would like the dynamic route to be considered as the static route, which could be the case if for example the user is also aware of the new dynamic route and does not wish to receive special acoustic information about this dynamic route, then the process continues with step 206. It is also imaginable that the navigation system itself could consider that the newly calculated dynamic route could eventually also be considered as being a static route and ask the user to acknowledge or refuse such a proposal. Finally, in step 206 a new static route is defined as being the same as the newly determined dynamic route of process step 204. The process then continues with process step 201. The whole process runs until the navigation system has detected that the final destination waypoint has been reached. Thus, whenever the navigation method as described with respect to Fig. 1 needs current position data and also needs to know whether this data corresponds to the static and/or the dynamic route or to neither, this data can be provided via the process as described with respect to Fig. 2.

In a variant, step 205 may consist in checking whether, besides the new dynamic route, also a new static route shall be determined. If this is the case, step 206 would consist in determining a new static route and the navigation method according to Fig. 1 would then be based (from step 106 on) on these two newly determined routes.

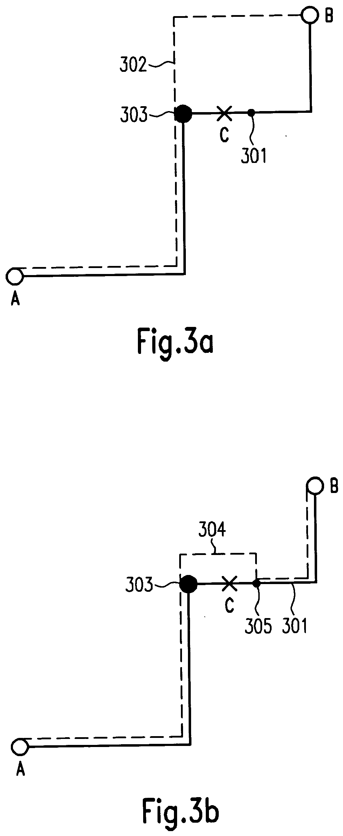

Figs. 3a - 3d show examples of an application of the navigation method according to the invention. Same reference numerals in all four Figures correspond to identical features and detailed explanations will only be given with respect to Fig. 3a and not constantly repeated. The Figs. 3a - 3d, showing examples of the application, may also correspond to the way the static and dynamic routes are output optically, like for example on the screen of a navigation system. However in this case they only represent an example of an implementation and not the only possible way of implementation. In particular, the information does not need to be output graphically, but could also be output using text.

Point A corresponds to a starting point of a route and point B to its final destination waypoint. It is thereby of no importance whether point A corresponds to the current position of the navigation system. Furthermore the coordinates or the description of point A could be provided to the navigation system manually or the positional data could be provided by the positioning device, as mentioned earlier. In the latter case point A does correspond to the current position. Using road information from a digitized map which has been loaded into the memory or which is permanently present in the memory of the navigation system a static route 301 is determined. This static route 301, shown in a solid line, may also be provided to the navigation system by simply uploading the static route 301 from a storage device, being either an internal part of the navigation system or an external device. Depending on predetermined parameters the exact form of the static route 301 may vary. For instance, route 301 could be calculated on the basis of the shortest way between A and B, or on the quickest way, taking into account not only the distance but also estimations of average speed depending on the type of road.

In addition to the static route the dynamic route is also determined. As described above, the dynamic route takes into account dynamic information. Such a dynamic information could, for example, be that the navigation system receives the information that at position C a traffic jam is present. Thus the dynamic route 302, shown in dotted lines, will bypass point C. As in this situation the dynamic and the static route are different, the navigation system will provide the user with navigation information concerning the difference (corresponding to step 107 in Fig.1). To ensure that the user is aware of that difference, the output format for the dynamic route is used meaning that in particular the navigation information is also output in an acoustical way.

From point A up until point 303 the static route and the dynamic route are the same. Thus, up to point 303 the navigation system will provide navigation information according to the output format of the static route. In particular, navigation information concerning the route up until point 303 will only be output in an optical way.

At the moment the user reaches point 303 or the vicinity of point 303, the navigation system will realise that the following manoeuvre step for the static route 301 and the dynamic route 302 is different (step 108 in Fig. 1). Therefore the user will be informed using the output format for the dynamic route, that it is advantageous to follow a dynamic route 302 and not the static route 301. As an example the navigation system could announce, in an acoustical way, that "A traffic jam is ahead on the static route, please go straight". At any time the user has the possibility to declare that the dynamic route should be considered as the static route. This could be the case when the user prefers to follow from now on the dynamic route instead of the static road, even if the dynamic route takes longer.

Fig. 3b shows a second example of the application of the inventive method. The way the dynamic route 302 is determined is different from the way the dynamic route has been determined in the application example corresponding to Fig. 3a. Dynamic route 304 is determined such that the user bypasses the point C, for example representing a traffic jam, and returns back on the static route 301, here shown at the position 305. Again, as for the previous example, the bypassing part (between points 303 and 305 on the dynamic route 304) may be determined according to different criteria, such as the shortest way back to the static route 301 by bypassing point C, or the fastest way back to the static route 301 taking into account average speeds for the roads used.

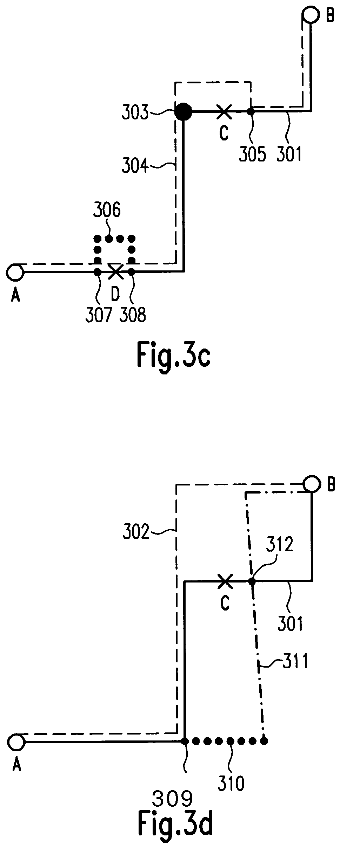

Fig. 3c shows a further example of an application of the inventive method. It is based on the example shown in Fig. 3b, with the difference that the user is travelling on the static route 301, where before reaching waypoint 307 the navigation system receives new dynamic information concerning waypoint D, for example a new traffic jam. In this case the navigation system may determine a new dynamic route based on dynamic route 304 with a bypassing section 306 between the waypoints 307 and 308, in order to bypass the waypoint D. In this example, again as for the example illustrated in Fig. 3b, the navigation system is configured such that the user is guided back onto the static route.

However, as an alternative the navigation system may be configured such that the dynamic route is re-determined such that the fastest or shortest way to the final destination waypoint B is found, taking into account the dynamic information concerning waypoints C and D.

Fig. 3d shows a fourth example of an application of the inventive navigation method. It shows another variant of the example illustrated in Fig. 3a. At position 309 the user of the navigation system quits both the static route 301 and the dynamic route 302. This might happen when the user makes a navigation error or if he wants to leave the usual route, the static route 301, on purpose, when for example he needs to visit another place on his way. In this case the user starts to move on a route 310, shown in dots, which has not previously been determined by the navigation system. However, using the positional data, which the navigation system receives from the positioning device, the navigation system will identify that the user is no longer on the static or the dynamic route 301, 302 and therefore calculates a new dynamic route 311 (shown in a dash-dot line). In a variant this calculation of a new dynamic route may be performed only on request from the user.

When the user travels on the newly determined dynamic route 311 he will reach the waypoint 312 where the navigation system will inform the user that he has the possibility to continue on the static route 301 or that he could continue on the dynamic route 311. Preferably, according to the invention, the information provided at point 312 is output using the dynamic route output format, meaning that in particular optical and acoustical means are used to inform the user.

In addition to the illustrated examples, many other variants exist which are also according to the invention. For example, more than two waypoints may be found and the static and dynamic routes determined such that they will pass through all waypoints.

## Claims

1. Method to assist navigation by means of a navigation system comprising the steps of:
- providing a digitized map,
- determining whether the navigation is performed in an area which is known to a user (100), and
(i) if this is not the case (101):
- determining a route based on two waypoints and the digitized map, and
- outputting navigation information about the route; and
(ii) if this is the case;
- determining a static route (103) and corresponding navigation information including manoeuvre steps based on at least two waypoints and static road information from the digitized map or by uploading a route into the navigation system from a storage medium,
- determining a dynamic route (104) and corresponding navigation information including manoeuvre steps based on the static road information from the digitized map and time-dependent dynamic information (105),
- formatting the navigation information differently for the static route and for the dynamic route,
- determining current position data,
- if the current position data corresponds to a waypoint on both the static and the dynamic route, comparing a following manoeuvre step of the static route and a following manoeuvre step of the dynamic route and
- outputting the formatted dynamic route navigation information about the following manoeuvre step optically and acoustically, if the manoeuvre steps are different,
- outputting the formatted static route navigation information about the following manoeuvre step optically or not outputting such navigation information at all, if the manoeuvre steps are not different.

2. Method according to claim 1, wherein the dynamic route is re-determined on a regular basis and/or when new dynamic information is provided to the navigation system and/or if the current position is neither on the previously determined dynamic route nor on the static route.

3. Method according to claim 2, wherein, when the current position is neither on the previously determined dynamic route nor on the static route, the dynamic route is re-determined such that the re-determined dynamic route and the static route have more than one waypoint in common.

4. Method according to one of the claims 1 to 3, further comprising the step of outputting static route navigation information if the navigation system is on the static route and providing dynamic route navigation information if the navigation system is on the dynamic route but not on the static route.

5. Method according to one of the preceding claims, wherein at least one of the steps of determining the static and/or the dynamic route is performed on request.

6. Method according to one of the preceding claims, further comprising the step of storing the static route on a non-volatile memory.

7. Computer program product directly loadable into an internal memory of a digital computer, comprising software code portions for performing the steps of the method according to one of the claims 1 to 6.

8. Computer program product stored on a medium readable by a computer system comprising computer readable program means for causing a computer to perform the steps of the method according to one of the claims 1 to 6.

9. Navigation system configured to perform the method according to one of the claims 1 to 6, comprising:
- input means for inputting data;
- data storage means for storing data, in particular a digitized map;
- dynamic information receiving means for receiving time-dependent dynamic information data;
- data processing means; and
- outputting means for outputting navigation information, in particular optical and acoustical means,

10. The navigation system according to claim 9, wherein the outputting means are designed such that if the navigation system is on the static route static route navigation information is output and if the navigation system is on the dynamic route but not on the static route dynamic route navigation information is output.

11. Vehicle comprising the navigation system according to one of claims 9 and 10.

## Patentansprüche

1. Verfahren zum Unterstützen der Navigation mittels eines Navigationssystems, das folgende Schritte umfasst:
- Bereitstellen einer digitalisierten Karte,
- Bestimmen, ob die Navigation in einem Gebiet ausgeführt wird, die einem Benutzer (100) bekannt ist, und
(i) falls dies nicht der Fall ist (101):
- Bestimmen einer Route basierend auf zwei Wegpunkten und der digitalisierten Karte, und
- Ausgeben der Navigationsinformationen über die Route; und
(ii) falls dies der Fall ist:
- Bestimmen einer statischen Route (103) und der entsprechenden Navigationsinformationen einschließlich der Manövrierschritte basierend auf mindestens zwei Wegpunkten und den statischen Straßeninformationen von der digitalisierten Karte oder mittels Hochladen einer Route von einem Speichermedium in das Navigationssystem,
- Bestimmen einer dynamischen Route (104) und der entsprechenden Navigationsinformationen einschließlich der Manövrierschritte basierend auf den statischen Straßeninformationen von der digitalisierten Karte und den zeitabhängigen dynamischen Informationen (105),
- unterschiedliches Formatieren der Navigationsinformationen für die statische Route und für die dynamische Route,
- Bestimmen der aktuellen Positionsdaten,
- falls die aktuellen Positionsdaten einem Wegpunkt sowohl auf der statischen als auch auf der dynamischen Route entsprechen, Vergleichen eines folgenden Manövrierschrittes der statischen Route und eines folgenden Manövrierschrittes der dynamischen Route und
- optisches und akustisches Ausgeben der formatierten Navigationsinformationen der dynamischen Route über den folgenden Manövrierschritt, falls die Manövrierschritte verschieden sind,
- optisches Ausgeben der formatierten Navigationsinformationen der statistischen Route über den folgenden Manövrierschritt oder überhaupt kein Ausgeben solcher Navigationsinformationen, falls die Manövrierschritte nicht verschieden sind.

2. Verfahren nach Anspruch 1, wobei die dynamische Route regelmäßig neubestimmt wird und/oder sobald dem Navigationssystem neue dynamische Informationen bereitgestellt werden und/oder falls die aktuelle Position weder auf der vorher bestimmten dynamischen Route noch auf der statischen Route ist.

3. Verfahren nach Anspruch 2, wobei sobald die aktuelle Position weder auf der vorher bestimmten dynamischen Route noch auf der statischen Route ist, die dynamische Route so neubestimmt wird, dass die neubestimmte Route und die statische Route mehr als einen gemeinsamen Wegpunkt aufweisen.

4. Verfahren nach einem der Ansprüche 1 bis 3, das ferner den Schritt des Ausgebens der Navigationsinformationen der statischen Route umfasst, falls das Navigationssystem auf der statischen Route ist und des Bereitstellens der Navigationsinformationen der dynamischen Route, falls das Navigationssystem auf der dynamischen Route aber nicht auf der statischen Route ist.

5. Verfahren nach einem der vorhergehenden Ansprüche, wobei mindestens einer der Schritte des Bestimmens der statischen und/oder der dynamischen Route auf Anfrage durchgeführt wird.

6. Verfahren nach einem der vorhergehenden Ansprüche, das ferner den Schritt des Speicherns der statischen Route in einem nichtflüchtigen Speicher umfasst.

7. Computerprogrammprodukt, das direkt in einen internen Speicher eines Digitalrechners ladbar ist, das Softwarecodeteile zum Durchführen der Schritte des Verfahrens nach einem der Ansprüche 1 bis 6 umfasst.

8. Computerprogrammprodukt, das auf einem von einem Computersystem lesbaren Medium gespeichert ist, das computerlesbare Programmvorrichtungen umfasst, um einen Computer zu veranlassen, die Schritte des Verfahrens nach einem der Ansprüche 1 bis 6 durchzuführen.

9. Navigationssystem, das konfiguriert ist, das Verfahren nach einem der Ansprüche 1 bis 6 durchzuführen, Folgendes umfassend:
- Eingabevorrichtungen zum Eingeben von Daten;
- Datenspeichervorrichtungen zum Speichern von Daten, insbesondere einer digitalisierten Karte;
- Empfangsvorrichtungen für dynamische Informationen zum Empfangen zeitabhängiger dynamischer Informationsdaten;
- Datenverarbeitungsvorrichtungen; und
- Ausgabevorrichtung zum Ausgeben der Navigationsinformationen, insbesondere optische und akustische Vorrichtungen.

10. Navigationssystem nach Anspruch 9, wobei die Ausgabevorrichtungen so gestaltet sind, dass, falls das Navigationssystem auf der statischen Route ist, Navigationsinformationen der statischen Route ausgegeben werden, und dass, falls das Navigationssystem auf der dynamischen Route, aber nicht auf der statischen Route ist, Navigationsinformationen der dynamischen Route ausgegeben werden.

11. Fahrzeug, das das Navigationssystem nach einem der Ansprüche 9 und 10 umfasst.

## Revendications

1. Procédé d'aide à la navigation au moyen d'un système de navigation comprenant les étapes suivantes :
- la fourniture d'une carte numérisée,
- la détermination du fait que la navigation est effectuée dans une zone qui est connue pour un utilisateur (100), et
(i) si ce n'est pas le cas (101) :
- la détermination d'un itinéraire sur la base de deux points de cheminement et de la carte numérisée, et
- la fourniture en sortie d'informations de navigation relatives à l'itinéraire ; et
(ii) si c'est le cas :
- la détermination d'un itinéraire statique (103) et d'informations de navigation correspondantes comprenant des étapes de manoeuvre basées sur au moins deux points de cheminement et des informations routières statiques provenant de la carte numérisée ou en chargeant un itinéraire dans le système de navigation à partir d'un support de stockage,
- la détermination d'un itinéraire dynamique (104) et d'informations de navigation correspondantes comprenant des étapes de manoeuvre basées sur les informations routières statiques provenant de la carte numérisée et d'informations dynamiques dépendant du temps (105),
- le formatage des informations de navigation différemment pour l'itinéraire statique et pour l'itinéraire dynamique,
- la détermination de données de position actuelle,
- si les données de position actuelle correspondent à un point de cheminement à la fois sur l'itinéraire statique et l'itinéraire dynamique, la comparaison d'une étape de manoeuvre suivante de l'itinéraire statique et d'une étape de manoeuvre suivante de l'itinéraire dynamique et
- la fourniture en sortie des informations de navigation d'itinéraire dynamique formatées relatives à l'étape de manoeuvre suivante optiquement et acoustiquement, si les étapes de manoeuvre sont différentes,
- la fourniture en sortie des informations de navigation d'itinéraire statique formatées relatives à l'étape de manoeuvre suivante optiquement ou aucune fourniture en sortie de telles informations de navigation, si les étapes de manoeuvre ne sont pas différentes.

2. Procédé selon la revendication 1, dans lequel l'itinéraire dynamique est à nouveau déterminé de manière régulière et/ou quand de nouvelles informations dynamiques sont fournies au système de navigation et/ou si la position actuelle n'est ni sur l'itinéraire dynamique précédemment déterminé ni sur l'itinéraire statique.

3. Procédé selon la revendication 2, dans lequel, quand la position actuelle n'est ni sur l'itinéraire dynamique précédemment déterminé ni sur l'itinéraire statique, l'itinéraire dynamique est à nouveau déterminé de manière que l'itinéraire dynamique à nouveau déterminé et l'itinéraire statique n'aient pas plus d'un point de cheminement en commun.

4. Procédé selon une des revendications 1 à 3, comprenant en outre l'étape de fourniture en sortie d'informations de navigation d'itinéraire statique si le système de navigation est sur l'itinéraire statique et la fourniture d'informations de navigation d'itinéraire dynamique si le système de navigation est sur l'itinéraire dynamique mais pas sur l'itinéraire statique.

5. Procédé selon une des revendications précédentes, dans lequel au moins une des étapes de détermination de l'itinéraire statique et/ou dynamique est effectuée sur demande.

6. Procédé selon une des revendications précédentes, comprenant en outre l'étape de stockage de l'itinéraire statique sur une mémoire non volatile.

7. Produit de programme informatique pouvant être directement chargé dans une mémoire interne d'un ordinateur numérique, comprenant des parties de code logiciel pour effectuer les étapes du procédé selon une des revendications 1 à 6.

8. Produit de programme informatique stocké sur un support lisible par un système informatique comprenant des moyens de programme lisibles par ordinateur pour amener un ordinateur à effectuer les étapes du procédé selon une des revendications 1 à 6.

9. Système de navigation configuré pour effectuer le procéder selon une des revendications 1 à 6, comprenant :
- des moyens d'entrée pour saisir des données ;
- des moyens de stockage de données pour stocker des données, en particulier une carte numérisée ;
- des moyens de réception d'informations dynamiques pour recevoir des données d'informations dynamiques dépendant du temps ;
- des moyens de traitement de données ; et
- des moyens de sortie pour fournir en sortie des informations de navigation, en particulier des moyens optiques et acoustiques.

10. Système de navigation selon la revendication 9, dans lequel les moyens de sortie sont conçus de manière que, si le système de navigation est sur l'itinéraire statique, des informations de navigation d'itinéraire statique soient délivrées en sortie et, si le système de navigation est sur l'itinéraire dynamique mais pas sur l'itinéraire statique, des informations de navigation d'itinéraire dynamique soient délivrées en sortie.

11. Véhicule comprenant le système de navigation selon une des revendications 9 et 10.
